Europäisches Patentamt

European Patent Office

Office européen des brevets

(11) Veröffentlichungsnummer: **0 498 237 A2**

# EUROPÄISCHE PATENTANMELDUNG

(21) Anmeldenummer: **92101166.4**

(51) Int. Cl.5: **G01M 11/00**

(22) Anmeldetag: **24.01.92**

(30) Priorität: **02.02.91 DE 4103185**

(43) Veröffentlichungstag der Anmeldung:
**12.08.92 Patentblatt 92/33**

(84) Benannte Vertragsstaaten:
**DE FR GB IT**

(71) Anmelder: **Firma Carl Zeiss**

**W-7920 Heidenheim (Brenz)(DE)**
(84) **DE FR IT**

(71) Anmelder: **CARL ZEISS-STIFTUNG HANDELND ALS CARL ZEISS**

**W-7920 Heidenheim (Brenz)(DE)**
(84) **GB**

(72) Erfinder: **Kürbitz, Günther, Dr.**
**Helfensteinstrasse 5**
**W-7923 Königsbronn-Zang(DE)**

(54) **Messeinrichtung zur Bestimmung des Auflösungsvermögens von Luftaufklärungsgeräten.**

(57) Es wird eine Meßeinrichtung zur Bestimmung des Auflösungsvermögens von Luftaufklärungs-Geräten angegeben, die eine quantitative Aussage darüber erlaubt, ob ein vorgegebenes Auflösungsvermögen des Luftaufklärungs-Gerätes erreicht oder überschritten wird. Wesentliches Element der Meßeinrichtung ist ein Kollimator-Objektiv, in dessen Bildebene sich ein selbstleuchtendes Testmuster befindet, das mittels des Kollimator-Objektives und des Objektives des Luftaufklärungs-Gerätes in die Abbildungsebene desselben abgebildet wird. Das Auflösungsvermögen kann bestimmt werden, ohne daß das zu messende Luftaufklärungs-Geräte geöffnet oder zerlegt werden muß.

FIG.1

Die Erfindung betrifft eine Meßeinrichtung zur Bestimmung des Auflösungsvermögens von Luftaufklärungs-Geräten.

In internationalen Abkommen, die Beobachtungsflüge über die Staaten der NATO und des Warschauer-Pakts regeln, sind auch Regeln festgelegt über Auswahl und Kontrolle der Flugzeuge sowie über den Einsatz der Beobachtungs- und Meßeinrichtungen. Luftaufklärungs-Geräte sollen beispielsweise in ihrer Leistungsfähigkeit hinsichtlich des Auflösungsvermögens beschränkt sein.

Der Erfindung liegt die Aufgabe zugrunde, das Auflösungsvermögen von Luftaufklärungs-Geräten zu messen, ohne diese Geräte öffnen oder zerlegen zu müssen. Unter dem Sammelbegriff Luftaufklärungs-Geräte sind im folgenden optische und elektro-optische Kameras, Forward Looking Infrarotgeräte (FLIR) und Infrarot-Line-Scanners (IRLS) zu verstehen. Ziel der Messung soll eine quantitative Aussage darüber sein, ob ein vorgegebenes Auflösungsvermögen des Luftaufklärungs-Gerätes erreicht oder überschritten wird.

Diese Aufgabe wird durch eine Meßeinrichtung gelöst, die aus einem Testmuster und aus einem Kollimator-Objektiv besteht, das zusammen mit dem Objektiv des Luftaufklärungs-Gerätes das Testmuster auf die Film- bzw. die Detektorebene des Luftaufklärungs-Gerätes abbildet.

Zur Bestimmung des Auflösungsvermögens von optischen und elektro-optischen Kameras wird zweckmäßigerweise als Testmuster eine rückwärtig beleuchtete Blende verwendet und es wird zwischen dem Testmuster und dem Kollimator-Objektiv ein Strahlteiler angeordnet, welcher das vom Film remittierte Bild des Testmusters auf einen CCD (Charge Coupled Device)-Sensor abbildet.

Für eine Meßeinrichtung zur Bestimmung des Auflösungsvermögens von Infrarot-Luftaufklärungs-Geräten mit scannenden Infrarot-Sensoren wird zweckmäßigerweise als Testmuster eines oder mehrere der gekühlten Infrarot-Detektorelemente des zu vermessenden Gerätes verwendet, das auf die Detektorebene der Meßeinrichtung abgebildet und mittels des Scanners des zu vermessenden Gerätes abgetastet wird.

Ein zweckmäßiges Ausführungsbeispiel der Erfindung zeichnet sich dadurch aus, daß die für die Meßeinrichtung wesentlichen Teile in einem Gehäuse angeordnet sind, welches Adapterteile zum Anschluß an das Luftaufklärungs-Gerät aufweist.

Die mit der Erfindung erzielten Vorteile bestehen insbesondere darin, daß sie ein einfach zu bedienendes und zuverlässig arbeitendes Gerät zur Bestimmung des Auflösungsvermögens von Luftaufklärungs-Geräten bietet. Wenn das Luftaufklärungs-Gerät aus einer optischen Kamera besteht, ist es zur Bestimmung des Auflösungsvermögens des in der Kamera verwendeten Objektivs lediglich erforderlich, daß für die Messung der Verschluß der Kamera geöffnet wird und daß sich ein Film in der Kamera befindet, von dem ein Bild für die Messung verwendet wird. Wenn das Luftaufklärungs-Gerät aus einem Infrarotgerät, beispielsweise einem FLIR oder einem IRLS besteht, muß der Detektor des Infrarotgerätes auf Arbeitstemperatur abgekühlt sein und das Infrarotgerät muß in Betrieb sein.

Ein Ausführungsbeispiel der Erfindung ist in der Zeichnung dargestellt und wird im folgenden näher beschrieben.

Fig. 1      zeigt eine schematische Darstellung der erfindungsgemäßen Meßeinrichtung zur Messung des Auflösungsvermögens von optischen Kameras.

Fig. 2      zeigt eine schematische Darstellung der erfindungsgemäßen Meßeinrichtung zur Messung des Auflösungsvermögens von Infrarot-Luftaufklärungsgeräten.

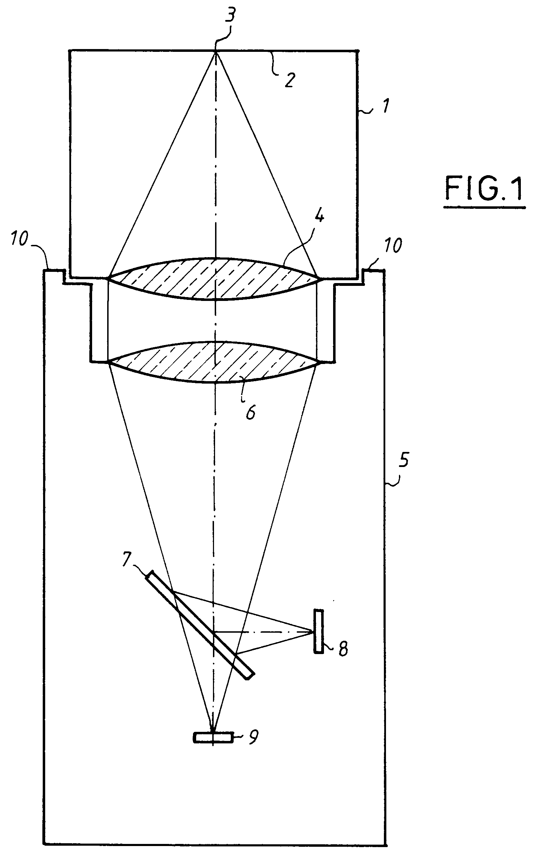

In der Darstellung der Figur 1 ist mit dem Bezugszeichen (1) das Gehäuse einer optischen Luftbild-Kamera bezeichnet. An der Frontseite des Gehäuses (1) befindet sich das Fotoobjektiv (4), an der inneren Rückseite des Gehäuses (1) befindet sich die Ebene (2), in der der photographische Film angeordnet ist. Mit dem Bezugszeichen (5) ist das Gehäuse einer Meßeinrichtung bezeichnet, das mit Hilfe von Adapterteilen (10) an das Gehäuse (1) der Kamera anschließbar ist. Das wesentliche Element der im Gehäuse (5) befindlichen Meßeinrichtung ist ein gut korrigiertes Kollimator-Objektiv (6), in dessen Bildebene sich ein selbstleuchtendes Testmuster (9) befindet. Dieses Testmuster (9) kann beispielsweise eine rückwärtig beleuchtete Lochblende sein, die als Punktquelle wirkt. Sie kann auch ein beleuchteter Spalt sein, der dann als Linienquelle wirkt, oder sie kann ein Balkentestmuster bestimmter Ortsfrequenz sein. Das Testmuster (9) wird mittels des Kollimator-Objektives (6) und des Objektives der Luftbild-Kamera (4) in die Filmebene (2) der Kamera (1) abgebildet. Das Bild (3) des Testmusters (9) wird infolge der Remission des in der Filmebene (2) befindlichen photographischen Filmes durch das Kamera-Objektiv (4) und das Kollimator-Objektiv (6) über den Strahlteiler (7) auf einen CCD-Sensor (8) abgebildet. Der CCD-Sensor kann in aller Regel ein linearer CCD-Detektor sein, der elektronisch ausgelesen wird. Falls erforderlich, kann auch ein flächenhafter CCD-Sensor verwendet werden. Wird als Testmuster eine Lochblende oder ein Spalt verwendet, dann enthält das ausgelesene CCD-Sensor-Signal die Punktbild-Funktion bzw. die Linienbild-Funktion der Übertragungsstrecke. Nach Digitalisierung kann das Sensor-Signal einer rechnergestützten Verarbeitung zugeführt werden. Diese kann z.B. in einer Fourier-Transformation (FFT, Fast Fourier Transform) bestehen, die - im Falle der Punkt- oder Linienbild-Funktion - direkt die MTF (Modulation Transfer Function) der Übertragungsstrecke liefert. Zur Ermittlung der MTF der Luftbild-Kamera muß die MTF der Übertragungsstrecke noch korrigiert werden. Die Korrektur muß die optischen Eigenschaften des Kollimator-Objektives, die endliche Größe des Testmusters und der CCD-Sensor-Elemente sowie die Tatsache berücksichtigen, daß die gesamte Übertragungsstrecke zweimal durchlaufen wird.

Bei Verwendung von Balkentestmustern kann mit Hilfe der CCD-Sensor-Signale direkt die Modulationstiefe bei der verwendeten Ortsfrequenz ermittelt werden.

Mit der in der Figur 1 dargestellten und beschriebenen Meßeinrichtung kann auch das Auflösungsvermögen von elektro-optischen Kameras mit Push Broom-Sensoren in 1 $\mu$m-Siliziumtechnologie bestimmt werden.

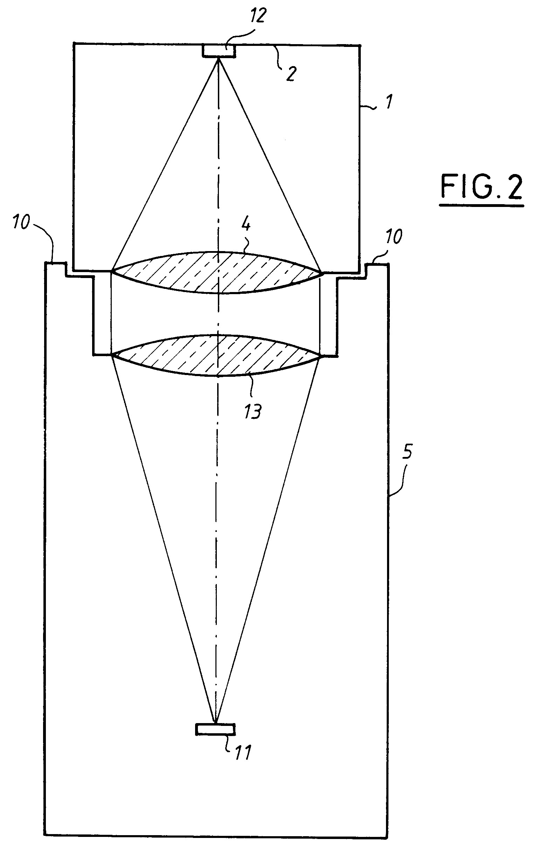

Wenn die beschriebene Meßeinrichtung zur Bestimmung des Auflösungsvermögens von scannenden IR-Sensoren verwendet werden soll, sind geringe Modifikationen erforderlich, die in Fig. 2 dargestellt sind. Sie bestehen darin, daß das verwendete Kollimator-Objektiv (13) dem Wellenlängenbereich des IR-Sensors angepaßt werden muß und daß ein Strahlteiler und ein CCD-Sensor für diesen Einsatz des Meßgerätes nicht erforderlich ist. Als Testmuster (11) ist für diesen Fall eines oder mehrere der gekühlten IR-Detektor-Elemente (12) des zu vermessenden Gerätes einzusetzen. Der Scanner im FLIR bzw. IRST besorgt dann die Abtastung der Detektorebene des Luftaufklärungs-Gerätes. Der sogenannte "Cold Spike" sorgt dafür, daß ohne aktive Bestrahlung des IR-Sensors eine gute Wärmesignatur im Ausgangssignal des IR-Detektor-Elementes der Meßeinrichtung erscheint.

Bei Verwendung von starrenden IR-Detektoren in Luftaufklärungs-Geräten muß anstelle des vorgehend beschriebenen einzelnen Detektor-Elementes ebenfalls ein IR-Zeilen- oder Flächen-Detektor Verwendung finden, oder es muß einem einzelnen Detektor-Element ein geeigneter Scanner vorgesetzt werden.

**Patentansprüche**

1. Meßeinrichtung zur Bestimmung des Auflösungsvermögens von Luftaufklärungs-Geräten, dadurch gekennzeichnet, daß die Meßeinrichtung aus einem Testmuster (9) und aus einem Kollimator-Objektiv (6) besteht, das zusammen mit dem Objektiv (4) des Luftaufklärungs-Gerätes (1) das Testmuster (9) auf die Abbildungsebene des Luftaufklärungs-Gerätes (1) abbildet.

2. Meßeinrichtung zur Bestimmung des Auflösungsvermögens von optischen und elektro-optischen Kameras nach Anspruch 1, dadurch gekennzeichnet, daß in der Abbildungsebene ein photographischer Film (2) angeordnet ist, daß als Testmuster (9) eine rückwärtig beleuchtete Blende dient und daß zwischen dem Testmuster (9) und dem Kollimator-Objektiv (6) ein Strahlteiler (7) angeordnet ist, welcher das vom Film (2) remittierte Bild (3) des Testmusters (9) auf einen CCD-Sensor (8) abbildet.

3. Meßeinrichtung zur Bestimmung des Auflösungsvermögens von Infrarot-Luftaufklärungs-Geräten mit scannenden Infrarot-Sensoren nach Anspruch 1, dadurch gekennzeichnet, daß in der Abbildungsebene ein Infrarot-Detektor (12) angeordnet ist, und daß als Testmuster (11) eines oder mehrere der gekühlten Infrarot-Detektorelemente des Luftaufklärungsgerätes dient, das auf die Detektorebene der Meßeinrichtung abgebildet und vom Scanner des Luftaufklärungs-Gerätes abgetastet wird.

4. Meßeinrichtung nach Anspruch 2, dadurch gekennzeichnet, daß das Testmuster (9), der Strahlteiler (7), der CCD-Sensor (8) und das Kollimator-Objektiv (6) in einem Gehäuse (5) angeordnet sind, das Adapterteile (10) zum Anschluß an eine Luftaufklärungs-Kamera (1) aufweist.

5. Meßeinrichtung nach Anspruch 3, dadurch gekennzeichnet, daß das Testmuster (9) und das Kollimator-Objektiv (6) in einem Gehäuse (5) angeordnet sind, das Adapterteile (10) zum Anschluß an ein Infrarot-Luftaufklärungs-Gerät aufweist.

FIG.1

FIG.2